Europäisches Patentamt

European Patent Office

Office européen des brevets

(19)

(11) **EP 1 253 544 A1**

(12) # EUROPEAN PATENT APPLICATION

(43) Date of publication:
**30.10.2002 Bulletin 2002/44**

(51) Int Cl.[7]: **G06F 17/60**

(21) Application number: **02445052.0**

(22) Date of filing: **24.04.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Linde, Mats**<br>  **426 77 Västra Frölunda (SE)**<br>• **Linde, Viveka**<br>  **426 77 Västra Frölunda (SE)** |
| (30) Priority: **24.04.2001 US 841667** | (74) Representative: **Andersson, Per Rune**<br>**Albihns Göteborg AB**<br>**Box 142**<br>**401 22 Göteborg (SE)** |
| (71) Applicant: **Medical Radar International AB**<br>**411 21 Göteborg (SE)** | |

(54) **Method and computer system for processing and presenting market and marketing information regarding a product**

(57) The present invention relates to a method for computerized processing and presenting market and marketing information regarding at least one first product. The method according to the invention comprises storing, in a database, collected data related to at least one key success factor associated with at least the market performance which is related to said first product; forecasting, in a central computer unit, the future sales of said first product based on said collected data related to said at least one key success factor; and transmitting said information to at least one external business. The invention allows improved monitoring of the status and development of a product on a market and provides improved understanding, benchmarking, forecasting and strategic decision-making as regards the future sales of the product in question.

Fig. 6

## EP 1 253 544 A1

**Description**

TECHNICAL FIELD:

The invention relates to a method for computerized processing and presenting of market and marketing information regarding a product.

The invention also relates to a computer system for processing and presenting of market and marketing information regarding a product.

The invention also relates to a method for facilitating and improving marketing activities and increasing sales of a product through processing and presenting of market and marketing information regarding said product.

BACKGROUND OF THE INVENTION:

In many fields of trade and industry, there is a general need for systems and methods for monitoring and evaluating the performance of a product or a service on a market, in particular for estimating the expected future sales of such a product or service. In this manner, information as regards market trends, marketing impact and competition can be used. By using such information in a suitable manner, the sale of the product or service in question can be expected to be improved.

There is also a general need for ways of providing information related to the marketing productivity of a product, i.e. the effect on the sales of a product which can be said to originate in various marketing activities related to said product.

One such field of trade is the medical industry, in which there is a need to monitor and evaluate the marketing situation and market performance of various medical drugs related to different diseases. As suggested above, the obtained information can then be used to improve the sale of the drugs in question.

To a great extent, the market for drugs is constituted by physicians issuing prescriptions of drugs to patients. This means that a high degree of marketing efforts and advertising are invested in a manner so as to influence the physicians to adopt, select and prescribe a particular brand of a drug.

The process in which a physician gradually obtains an interest for a drug - from an initial stage in which the physician becomes aware of the drug until a final stage in which the particular drug has become the physician's first rated drug, or "drug of choice" - can be referred to as the "adoption" of the drug in question. Consequently, in order to accomplish a high marketshare for a particular drug, it is of importance to obtain a situation in which the physicians who are treating patients with a particular disease "adopts" and consequently acquires an interest and confidence for the drug.

If a physician has fully "adopted" a particular drug, it can be expected that the sales of that drug will be improved.

There are existing ways of providing information of the market performance of particular drugs, by collecting information related to prescriptions issued by a number of physicians during a particular time period. Although such a known method would provide information as to the actual market position of a particular drug, it will not provide the reasons behind the selection process which the physicians undergo when deciding which (of several) drugs to prescribe against a certain given disease.

Furthermore, there is a demand for improved ways of forecasting changes in sales and to estimate and present information related to the present market performance of a product or service. In order to obtain accurate information regarding the marketing situation related to a drug (or, in fact, any other product), it is of importance to provide means for collecting, transmitting and presenting data related to, for example, the adoption of the drug, for quick and easy understanding and treatment of such data by the respective end user. In particular, it is known that a significant part of a brand's marketshare is constituted by so-called repeat sales, i.e. the case in which a customer repeatedly purchases the same brand, while changes in the total market and/or a brand's share of the market might emanate from consumers entering or leaving the market or switching between brands.

It can thus be noted that it is desirable for companies to monitor and process information as regards the market situation for a particular product in a more effective manner.

SUMMARY OF THE INVENTION:

A primary object of the invention is to provide a method and a system for providing an improved way of estimating the future sales of a product or service and to estimate the present market performance and marketing productivity related to said product.

This object is accomplished by means of a method according to subsequent claim 1, i.e. a method for computerized processing and presenting market and marketing information regarding at least one first product, comprising:

storing, in a database, collected data related to at least one key success factor associated with at least the market performance which is related to said first product; forecasting, in a central computer unit, the future sales of said first product based on said collected data related to said at least one key success factor; and transmitting said information to at least one external user.

This object is also accomplished by means of a computer system according to subsequent claim 9, i.e. a computer system for processing and presenting market and marketing information regarding at least one first product, comprising a database for storing collected data related to at least one key success factor associated with at least the market performance which is related to said first product, and a central computer unit adapted for forecasting the future sales of said first product based on said collected data related to said at least one key success factor, and for transmitting said information to at least one external user.

A further object of the invention is to provide a method for allowing improved marketing activities and thereby increasing sales of a product through computerized processing and presenting of marketing information regarding said product.

This object is accomplished by means of a method according to subsequent claim 12, i.e. a method for facilitating and improving marketing activities and increasing sales of at least one first product, comprising collecting and storing data related to at least one key success factor associated with at least the market performance which is related to said first product; forecasting the future sales of said first product based on said collected data related to said at least one key success factor; and making said information available to at least one external user.

A further object of the invention is to provide a computer-readable data carrier adapted for storing market and marketing information related to a product.

This object is accomplished by means of a computer-readable data carrier according to subsequent claim 20, i.e. a data carrier for storing market and marketing information regarding at least one first product, said information being related to at least one key success factor associated with at least the market performance which is related to said first product; said information also being related to expected future sales of said first product based on said collected data related to said at least one key success factor.

By means of the invention, a number of advantages will be obtained. Firstly, it can be noted that the present invention constitutes a basis for monitoring present market performance and forecasting the future changes in sales of the product or service in question. The invention can also be used to estimate the present marketing productivity of said product or service in order to allow, for example, benchmarking of said product as related to other similar products.

According to the invention, a number of key "success factors", which will be described below, are used. These key success factors provide transparency of a market for fast understanding, benchmarking, forecasting and strategic decision-making and are crucial for the expected future sales of the product in question.

The invention provides a comprehensive and unique combination of relevant qualitative and quantitative information which can be summarised as said key success factors. This provides timesaving access to and understanding of complicated market mechanisms, and allows for benchmarking versus competitors, across countries, across markets (e.g. indications) and over time.

In particular, the invention allows a measure of the so-called adoption of a particular product to be provided, as well as a measure reflecting its present market performance (ability to capture marketshares from competitors) and generate repeat businesses. The invention also provides information as to why a particular product is chosen, and to determining the impact of detailing.

The invention constitutes a user-friendly system of the above-mentioned type, due to the focussing on said key success factors which are related to at least the market performance which is related to said product. Furthermore, a user can by accessing a particular database choose to set various parameters, such as different countries, different time periods which are related till said "key success factors". Also, the invention provides a possibility of estimating the marginal effect related to a detaling (or non-detailing) of a product in question. In this manner, marketing resources can be distributed and used in an optimal way.

BRIEF DESCRIPTION OF THE DRAWINGS:

The invention will now be described in more detail for explanatory, and in no sense limiting, purposes, with reference to the figures described hereafter.

Fig. 1    shows schematically how the total market for a product such as a medical drug is divided into different submarkets,

Fig. 2    shows in a simplified form a basic computer-based system in accordance with the invention,

Fig. 3    shows schematically the adoption process related to a particular drug,

Fig. 4    is a diagram which shows schematically the actual adoption rates of a plurality of brands,

Fig. 5    is a table showing schematically the marketing productivity in terms of the adoption rate, the capture rate and the ability to target the detailing to physicians with a high number of patients by comparing these key factors for detailed and not detailied physicians, and

Fig. 6    indicates in a schematical manner the various parameters which affect the implementation of the present invention.

PREFERRED EMBODIMENT:

The invention relates to a method and a system for forecasting the future sales regarding a particular product or service and for providing information related to the present market performance and the marketing productivity of said product or service. As will be described in detail below, the invention is particularly, but not exclusively, adapted for processing and presenting marketing information related to medical drugs. However, the invention is equally well suited for any other product or service. In this regard, the term "product" which is used in this application is consequently used to indicate any form of article, goods, services or product which can be commercially available on a market.

Consequently, any form of business, in the form of a manufacturer, research centre, marketing agency, department store or similar enterprise, may use the invention in a suitable manner in order to obtain marketing information related to a particular product. In this manner, the invention can be used in order to meet certain desired business objectives including incremental sales and obtaining incresed market shares for the product.

Furthermore, the invention can also be used in order to meet certain objectives as regards the manner in which the information in question is gathered, stored, transmitted and presented. The hardware and software components used for the invention comprises software components executing on various hardware machines. This will be described in greater detail below.

For the purpose of understanding the present invention, a number of key "success factors" for obtaining improved market performance of a product, such as a medical drug, will now be described. The invention relies on the insight that such key success factors are crucial for the expected future sales of the product in question, and also for the possibilities of processing, presenting and transmitting relevant information regarding the market situation of a drug.

This set of information is normally provided by a service provider such as a medical marketing company, and is supplied, in accordance with the invention, to a client which normally is in the form of a medical company, a drug manufacturer, a research center or a similar enterprise.

It can be noted that the key success factors provide transparency of a market for fast understanding, benchmarking, forecasting and strategic decision-making. By means of the key success factors, the structure, dynamics and trends on a particular market for a particular drug and/or disease can be studied and analyzed. As will be described in greater detail below, the result of such a process can then easily be stored for subsequent transmission to a client.

According to the present invention, five key success factors will now be presented. In the following, a preferred embodiment of the invention with reference to marketing information of medical drugs will be described.

One such key success factor is the so-called "detailing rate" of a particular drug. The detailing rate is a measure or parameter which corresponds to the proportion of physicians (from a group) spontaneously recalling detailing activities related to a drug. Such detailing activities may for example consist of personal promotion from, for example, a pharmaceutical representative during a group meeting, a one-to-one meeting (i.e. a personal visit), a symposium, a seminar or a similar detailing activity. For the purpose of the present invention, the detailing rate is assessed for a particular time perdiod, for example the last 6 months. However, other time periods than 6 months can also be selected.

Consequently, the detailing rate provides input information related to the marketing of a particular drug, and is obtained through interviews with physicians.

In order to be successful in marketing, it is important to reach out to a sufficiently high proportion of physicians with detailing. Consequently, it is desired to obtain a high detailing rate for a particular drug.

Another key success factor is the so-called "adoption rate", which is a measure which indicates how well a drug is adopted by a physician. The adoption rate consequently provides a measure the amount of which indicates to what degree a physician gradually adopts the drug, from a first stage with an initial first knowledge of the drug until a final stage, in which the drug constitutes the first choice (against a particular disease) for the physician. Consequently, the adoption rate provides important knowledge of the physician's emotional process during the adoption process of a drug and can be used for initiating various marketing activities. In particular, it provides a method by means of which the market adoption of different brands can be quickly and easily compared.

A further key success factor is the so-called "capture rate", which is a measure which indicates and summarises the present market performance of a drug. The capture rate reflects the total ability of a product to capture market shares, reflecting the impact from market and marketing influences and forecasting changes in future sales. Consequently, it can be said that the capture rate of a drug is an indication of the competitive strength of the drug, or the drug's present market performance.

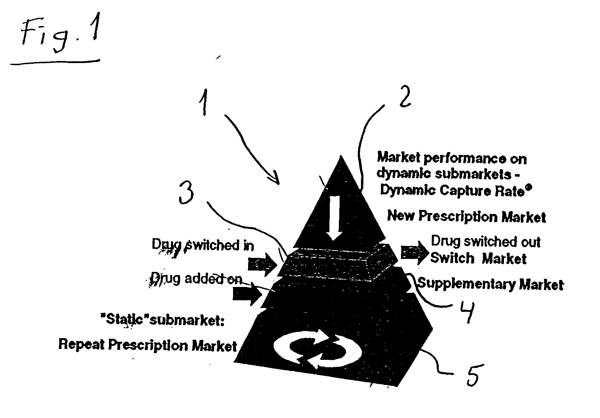

In order to fully describe the capture rate of a drug, the concept of dynamic and static market segments will now be described with reference to Fig. 1. The total market for a particular product - which is indicated by reference numeral 1 in Fig. 1 - can be schematically described as a pyramid, which in turn is sub-divided into several segments. More precisely, the total market 1 can be subdivided into so-called dynamic and static market market segments. In this regard, the term "dynamic submarkets" is used to describe the segments which actively change in response to external market influences. An example of such a dynamic submarket is the "new prescription market" 2, which illustrates which brands are used for the initial treatment of patients, and their relative market positions.

Another kind of dynamic submarket is the "switch market" 3, which shows brands of drugs switched in and switched out when a physician changes the prescribed drug during the treatment of an disease. A further type is the "supplementary market" 4, which illustrates which brands of drugs are added on to basic therapy.

In contrast to the dynamic markets, the so-called "repeat prescription market" 5 is a static market which is relatively stagnant and merely reflect (or result from) previous changes on the dynamic submarkets (although repeat sales often account for the bulk of total sales). The repeat prescription market 5 shows which brands are repeat prescribed. The repeat prescription market 5 is not static in the long run, but changes on this market are only the result of the dynamics on the new prescription market 2, the switch market 3 and the supplementary market 4. The results of previous marketing efforts are accumulated on the repeat prescription market 5 and it is on this market that the large prescription/sales volumes are acquired for chronic disorders.

In all chronic disorders a large part of sales emanate from repeat prescriptions - which is a consequence of yesterday's marketing efforts - and may thus camouflage what is happening in the dynamic market segments.

In can be noted that a good position on the repeat prescription market 5 is often the result of a good position on the new prescription market 2. Also, losing on the switch market 3 may be the first sign of losing future repeat prescription market 5 shares.

The aim of marketing is to influence and increase the prescription rate of a drug, i.e. which leads to sales. As such, marketing needs to influence market performance by affecting the ability of the drug in question to capture new patients in the dynamics segments (i.e. the new prescription, switch and supplementary markets). This ability reflects the impact of market and marketing influences and forecasts changes in future sales on the repeat prescription market. Information about the dynamic market shares of all brands of drugs on the market, and overall market performance, are summarised by the above-mentioned capture rate.

It can be noted that the term capture rate provides a measure of the drug's present market performance. Due to the connection between what is going on in the dynamic markets and repeat prescriptions, an estimation of future sales (i.e. mostly repeat prescription sales) of the product in question can be provided.

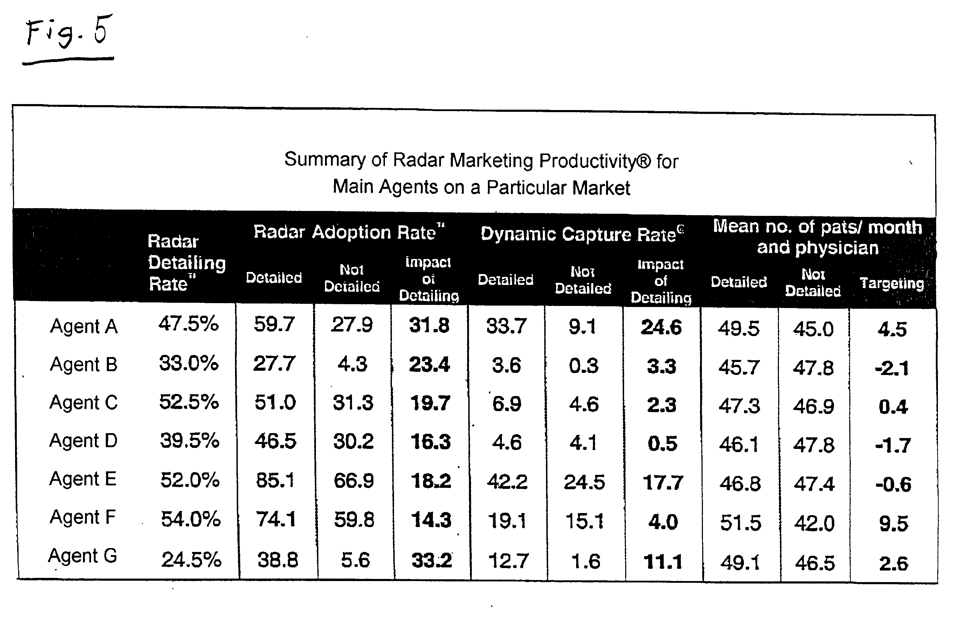

Another key success factor is the so-called "marketing productivity" of a particular drug. In the context of the present invention, this factor can be defined as the difference or marginal effect detailing has achieved in terms of the adoption and capture rate of an agent among physicians who have been detailed and those who have not been detailed during a given time period. The market productivity is presented as the impact of detailing on the adoption process and market performance of an agent. This will be discussed in greater detail below with reference to Fig. 5.

A further key success factor relates to the rationales for brand choice, i.e. the reasons behind the choice of the physicians for selecting a particular brand of a drug. It is believed that success in the market can be obtained via the rationale for choosing a particular drug, i.e. the "why", "when", "to whom" and "how" of prescribing the drug. Reasons for prescriptions can be presented as verbatims and the actual market entries as market shares on the "dynamic" market segments - the new prescription market 2, the switch market 3 and the supplementary market 4.

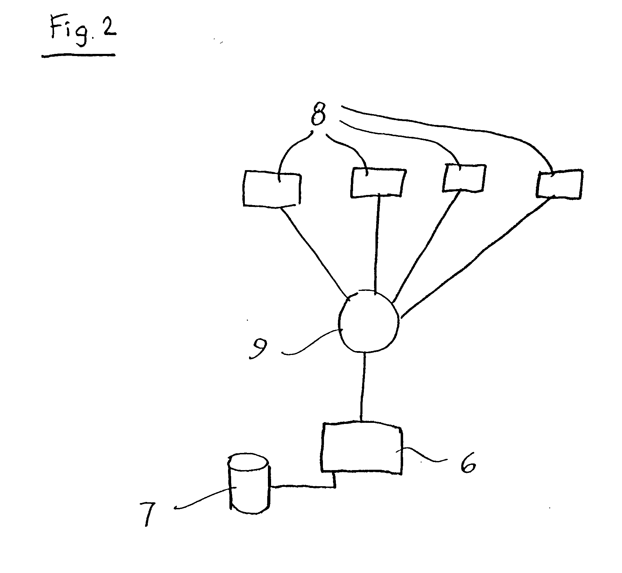

Fig. 2 indicates in a simplified and schematic manner a basic computer-based system by means of which the invention can be carried out. Said system comprises a central computer unit 6 which can be of general-purpose type, provided with a central processsing unit, a memory unit, a display screen, a keyboard, a communication unit etc.

The central computer unit 6 is associated with a database 7 adapted for storing data related to the various key success factors which have been described above. The computer unit 6 is also adapted for communicating with a plurality of external computers 8 via a suitable computer network 9, such as the Internet. It is obvious that the number of external computers 8 can be very large. In this regard, each external computer 8 is associated with an external client or user who is given authority to acces the information in the database 7. According to what is known as such, any one of the external computers 8 can be arranged so as to communicate with the central computer unit 6 if an appropriate user identification code and password are entered and transmitted to the central computer 6.

As mentioned, the plurality of external computers 8 correspond to various clients or users which are cooperating with a service provider which is associated with and responsible for the central computer unit 6 with its database 7. The client can be expected to be interested in acquiring information related to the market performance or the expected future sales of their own products (or their competitors' products). This will be now described in detail below. In particular, the invention will be described in detail in terms of how information related the various key success factors is collected, stored, processed and presented.

Data is gathered both by asking chosen physicians from a target group, and by monitoring their drug prescription and purchase patterns. For example, by conducting interviews with physicians, the detailing rate can be established. More precisely, a sample of decision makers' perceived detailing about drugs of various brands on the market is used as an estimate of actual detailing rates.

Furthermore, the adoption of a drug can be graphically illustrated as a linear process which starts with the brand being a considered alternative in a physician's choice process and which ends with it becoming a "drug of choice", or a first rated drug for a particular disease.

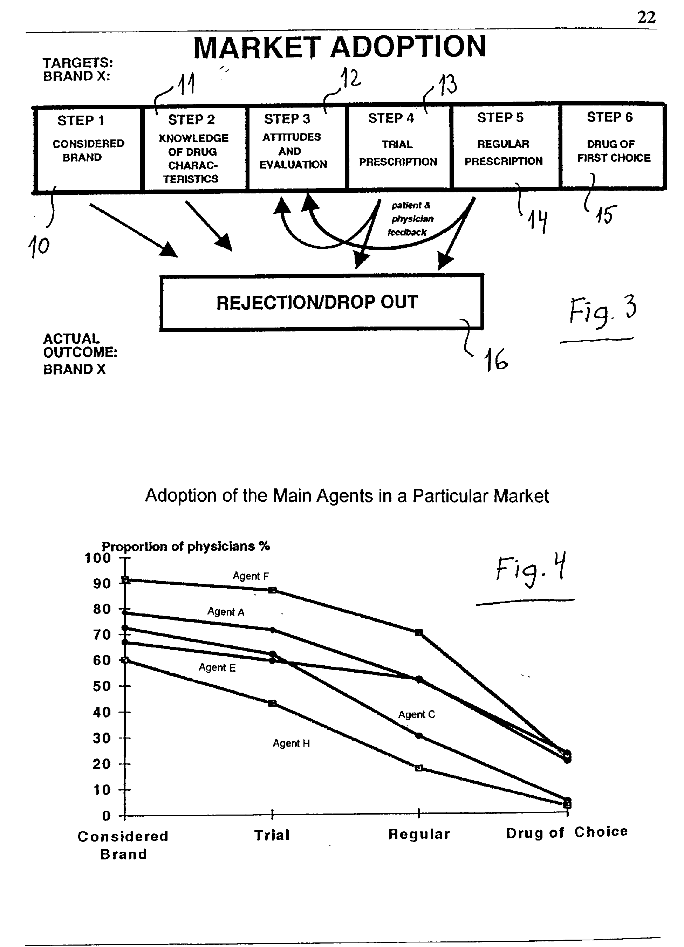

With reference to Fig. 3, the first step, indicated by means of reference numeral 10, of the adoption process is the "considered brand" step, which refers to a physician's spontaneous association of a particular drug to a specific indication (thus being one of his/her brand choice alternatives in the treatment decision making process). The proportion of physicians who considers the brand is above all the result of quantitative marketing measures.

The second step 11 of the adoption process is the "knowledge of drug characteristics" step and the third step is the "attitudes and evaluation" step 12. In these steps, the physician has become familiar with, believes in and has a need for the qualities presented in the product concept on which the drug is based. This is mainly achieved through qualitative marketing efforts. Negative attitudes may result in the physician rejecting the drug during these steps.

If the information about the drug and its qualities makes a positive impression upon the physician, it results in the fourth step, so so-called "trial prescription" step 13. In this step, the physician evaluates the drug, either objectively or subjectively. A positive assessment leads to new trials and a gradual transition to the fifth step, which is the "regular prescriptions" step 14, and the sixth step, the "drug of first choice" step 15. This sixth and final stage thus represents a situation in which the physicians feels confident about the drug in question and uses it as a first choice for treating the corresponding illnes. Negative results or assessments during these last steps may prevent successful adoption of the brand or may result in market rejection, or "drop out" 16.

During determination of the adoption rate according to the invention, certain information is collected from a sample of decision-makers. For example, it is established which brands of drugs have been considered in decision situations by physicians. In this regard, information regarding the latest 6 months may for example be used. Also, it is established which drugs are perceived to be tried and/or regularly used. Furthermore, it is established which particular brand of a drug which is assessed to be the drug of first choice for a physician.

Fig. 4 shows a diagram of the proportion of physicians from a particular test group adopting a particular brand, during consequtive steps during the above-mentioned adoption process.

According to what is shown in Fig. 4, it can be noted that the adoption rate summarises the proportion of physicians adopting a brand at different levels in the adoption process - considered brand, trial, regular prescription, and drug of first choice. Thus it provides a method by which the market adoption of the different brands can be quickly and easily compared.

The adoption for each drug is summarized as an adoption rate, preferably by way of the following algorithm:

(¼ x the proportion of decision-makers considering the drug) + (½ x the proportion of decision-makers having trial prescribed the drug) + (¾ x the proportion of decision-makers regularly using the drug) + (1 x the proportion of physicians having the drug as drug of choice)

The various weight factors can be chosen in any manner which is suitable for the type of product or service in which the invention is used.

Finally, the information as regards the adoption process is stored in the computer etc.

With reference to the schematical market description according to Fig. 1, it can be noted that distribution of the latest decisions regarding, for example the "switch" or "repeat" markets are used as an estimation of the relative size (or importance) of different submarkets. A data program is then used to draw a graph corresponding to the pyramid shaped figure according to Fig. 1, which consequently illustrates the relative size of submarkets. The data program also calculates the number of patients per average decision maker by combining data about the total number of patients per month and the relative size of the submarkets.

Information about brand choices in each of the submarkets is collected from a random sample of decision-makers. For new and switch decisions information is also gathered as the reasons for those choices.

As regards the capture rate, as discussed above, it can be noted that according to the invention, data from a random sample of decision-makers as to the relative size of the submarkets, and the market shares of drugs on the new, switch and supplementary submarkets, is estimated. This data is then summarized into "capture rate" levels for drug brands, substance classes and companies. The following algorithm is then preferably applied:

| Step 1: | | |
|---|---|---|
| Figures from the market pyramid | Segment size | Proportion of Prescriptions |
| New Prescriptions | 25% | New/ SUM 25/50 = 0.5 |
| Switch | 15% | Swi/ SUM 15/50 = 0.3 |
| Supplementary | 10% | Sup/ SUM 10/50 = 0.2 |
| Sum of dynamic segments | 50% | |
| Step 2: | | |
| Market shares on the market pyramid Drug A: | | |
| New Prescription (X) | 10% | |
| Switch (net) (Y) | 5% | |
| Supplementary (Z) | 20% | |
| Step 3: | | |
| Capture Rate for drug A | | |

(X*New) + (Y*Swi) + (Z*Sup) = Capture Rate

e.g (10%*0.5) + (5%*0.3) + (10%*0.2) = 10.5

As regards the marketing productivity, it can be noted that according to the invention, the adoption rate and the capture rate are calculated for those decision-makers perceiving detailing and for those decision-makers not perceiving detailing according the principles and algorithms outlined above. The results of the two sets of calculations are then compared to determine what kind of impact detailing has had on the adoption and performance of an agent. Such comparison relies, of course, on a satisfactory distribution of detailed and not detailed decision-makers.

In addition, targeting capacity is estimated in terms of the number of patients per month and average decision maker in the detailed and not detailed segments, by way of a cross tabulation between the total number of patients per month with recall of detailing, referred to as the detailing rate.

Fig. 5 illustrates the marketing productivity of a number of brands. In Fig. 5, values representing the detailing rate, the adoption rate and the capture rate are presented. The marketing productivity is also shown in Fig. 5, since the various rates are defined in two columns, one showing with detailing and the other one showing without detailing.

The market productivity is presented as the impact of detailing on the adoption process and market performance of an agent.

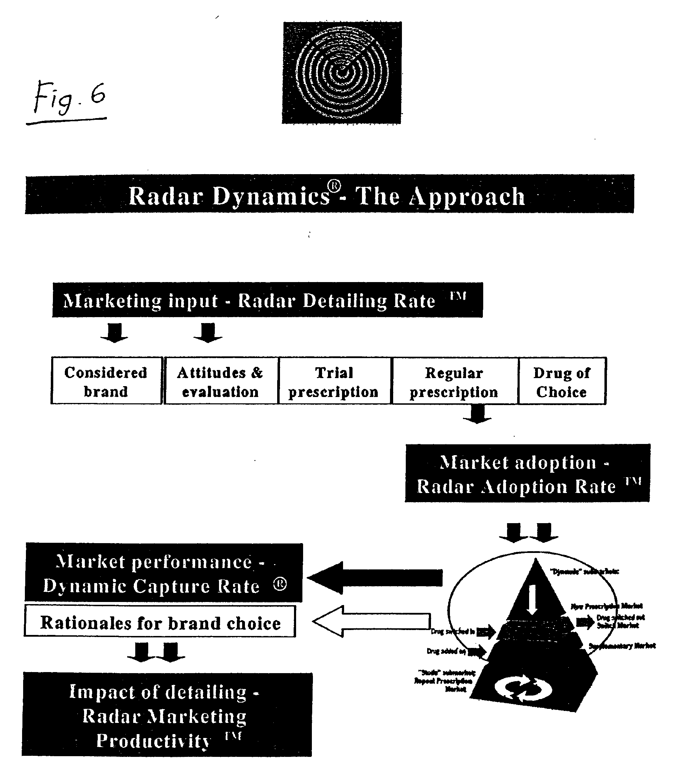

Fig. 6 indicates, in a schematical manner, the various parameters which affect the implementation of the present invention. As indicated, input data related to the market in question provides information regarding the "considered brand" step (see also Fig. 3). This information can be collected by carrying out interviews and surveys among physicians. Such information will also reflect the attitudes and the physicians' experience and evaluation of the particular drug. In this regard, it can be expected that the physician has become familiar with the drug in question.

If the marketing efforts and other influence on the physician have been sufficient and successful, the so-called "trial prescription" step will follow. After a positive assessment of the drug, the physician will use the drug for regular prescriptions. Ultimately, the drug will be the physician's "drug of choice".

As mentioned above, the so-called adoption rate summarises the proportion of physicians adopting a brand at the various stages in the adoption process (i.e. the "considered brand" stage, the "attitudes and evaluation" stage, the "trial prescription" stage, the "regular prescription" stage and the "drug of first choice" stage). Thus it provides a method by which the market adoption of different brands can be compared.

Furthermore, and as indicated in Fig. 6, the adoption rate for a particular product will affect the total market for this product. As mentioned above, this total market can be sub-divided into dynamic and static market market segments. The dynamic market segments comprise the "new prescription market", the "switch market" and the "supplementary market". The static market segment corresponds to the "repeat prescription market". Since the aim of marketing is to increase the prescription rate of a drug, marketing needs to affect the ability of the drug in question to capture new patients in the dynamic market segments. As mentioned above, information about the dynamic market shares of different brands are summarised by the term capture rate. Consequently, the capture rate indicates the drug's present market performance. Due to the connection between the dynamic market segments and the repeat market, an estimation of future sales of the product can be provided in accordance with the invention.

Furthermore, as indicated in Fig. 6, the marketing productivity of a drug is defined as the marginal effect achieved by detailing in terms of the adoption and capture rate of an agent among physicians who have been detailed and those who have not been detailed during a given time period.

Consequently, the invention relies on the fact that information is collected from a sample of decision-makers. The information is processed and reduced into the five above-mentioned key success factors, making the present market performance transparent and allowing for the prediction of future sales.

A client may then obtain the finished result, i.e. the information regarding the marketing parameters described above, in various ways. For example, the results can be obtained by the client via a connection to the service provider's web page, by means of a password giving access to the information in question. This has been described above with reference to Fig. 2. In this manner, each client can select their own sets of information related to the drugs of interest. By connecting to the database 7 (see Fig. 2), the client may consequently select and use the set of information which is of interest, for providing tables, graphs etc. Alternatively, the result can be delivered to the client on a suitable computer-readable data carrier, for example a diskette or a CD-ROM disc, which then contains the information selected by the user and processed according to the invention. The information can also be supplied via e-mail as a data file. Also, the result can be presented in the form of a printed publication.

The client can be a medicine manufacturer, a research center or even an advertising agency, who then may use the principles according to the invention in order to gain access to valuable marketing information. In particular, the information which can be provided by means of the invention can be used for benchmarking of various products, for example on different markets or during specific time periods.

The invention is not limited to the embodiments described above but may be varied within the scope of the appended patent claims. In particular, it should be noted that the invention is not limited for applying to marketing and selling medical drugs. The invention can be equally well used in other fields of trade, and other types of products (for example cars) and services (for example bank services).

**Claims**

1. A method for computerized processing and presenting market and marketing information regarding at least one first product, comprising:

   storing, in a database, collected data related to at least one key success factor associated with at least the market performance which is related to said first product;
   forecasting, in a central computer unit, the future sales of said first product based on said collected data related to said at least one key success factor; and
   transmitting said information to at least one external user.

2. A method according to claim 1, wherein the key success factor associated with the market performance is constituted by information related to at least one of the following measures:

   a measure of the number of new customers purchasing said first product,
   a measure of the number of customers switching between said first product and at least one additional, related product, and
   a measure of the number of customers using said first product in addition to at least one additional, related product.

3. A method according to claim 1 or 2, comprising collecting data related to an additional key success factor corresponding to a measure of a proportion of customers adopting said first product during a predetermined adoption process.

4. A method according to any one of claims 1-3, comprising collecting data related to an additional key success factor corresponding to a measure of a proportion of customers recalling personal promotion during a particular time period and related to said first product.

**5.** A method according to any one of the preceding claims, comprising collecting data related to an additional key success factor corresponding to the marketing productivity related to said first product.

**6.** A method according to claim 5, wherein said marketing productivity corresponds to a measure of the impact of detailing related to said first product.

**7.** A method according to any one of the preceding claims, comprising collecting data related to an additional key success factor corresponding to the rationales for selecting said first product.

**8.** A method according to any one of the preceding claims, wherein said information is transmitted to said user via a network such as the Internet.

**9.** A computer system for processing and presenting market and marketing information regarding at least one first product, comprising a database for storing collected data related to at least one key success factor associated with at least the market performance which is related to said first product, and a central computer unit adapted for forecasting the future sales of said first product based on said collected data related to said at least one key success factor, and for transmitting said information to at least one external user.

**10.** A system according to claim 9, wherein the central computer unit and the database are adapted for processing information related to said key success factor in the form of at least one of the following measures:

a measure of the number of new customers purchasing said first product,
a measure of the number of customers switching between said first product and at least one additional, related product, and
a measure of the number of customers using said first product in addition to at least one additional, related product.

**11.** A system according to claim 9 or 10, wherein said central computer unit and said database are connected to a network such as the Internet, the information is said database being accessible to said external user.

**12.** A method for facilitating and improving marketing activities and increasing sales of at least one first product, comprising:

collecting and storing data related to at least one key success factor associated with at least the market performance which is related to said first product;
forecasting the future sales of said first product based on said collected data related to said at least one key success factor; and
making said information available to at least one external user.

**13.** A method according to claim 12, wherein the key success factor associated with the market performance is constituted by information related to at least one of the following measures:

a measure of the number of new customers purchasing said first product,
a measure of the number of customers switching between said first product and at least one additional, related product, and
a measure of the number of customers using said first product in addition to at least one additional, related product.

**14.** A method according to claim 12 or 13, comprising collecting data related to an additional key success factor corresponding to a measure of a proportion of customers adopting said first product during a predetermined adoption process.

**15.** A method according to any one of claims 12-14, comprising collecting data related to an additional key success factor corresponding to a measure of a proportion of customers recalling personal promotion during a particular time period and related to said first product.

**16.** A method according to any one of claims 12-15, comprising collecting data related to an additional key success factor corresponding to the marketing productivity related to said first product.

**17.** A method according to claim 16, wherein said marketing productivity corresponds to a measure of the impact of detailing related to said first product.

**18.** A method according to any one of claims 12-17, comprising collecting data related to an additional key success factor corresponding to the rationales for selecting said first product.

**19.** A method according to any one of the preceding claims, wherein said information is transmitted to said user via a network such as the Internet.

**20.** Computer-readable data carrier for storing market and marketing information regarding at least one first product, said information being related to at least one key success factor associated with at least the market performance which is related to said first product; said information also being related to expected future sales of said first product based on said collected data related to said at least one key success factor.

Fig. 1

**Fig. 2**

22

# MARKET ADOPTION

TARGETS:
BRAND X:

| STEP 1 | STEP 2 | STEP 3 | STEP 4 | STEP 5 | STEP 6 |
|---|---|---|---|---|---|
| CONSIDERED BRAND | KNOWLEDGE OF DRUG CHARAC- TERISTICS | ATTITUDES AND EVALUATION | TRIAL PRESCRIPTION | REGULAR PRESCRIPTION | DRUG OF FIRST CHOICE |

11  12  13

patient & physician feedback

10

REJECTION/DROP OUT

14  15

Fig. 3

ACTUAL OUTCOME: BRAND X

16

## Adoption of the Main Agents in a Particular Market

Fig. 4

Proportion of physicians %

Agent F
Agent A
Agent E
Agent C
Agent H

100
90
80
70
60
50
40
30
20
10
0

Considered Brand — Trial — Regular — Drug of Choice

Fig. 5

Summary of Radar Marketing Productivity® for
Main Agents on a Particular Market

| | Radar Detailing Rate[i] | Radar Adoption Rate[ii] | | | Dynamic Capture Rate[c] | | | Mean no. of pats/ month and physician | | |
|---|---|---|---|---|---|---|---|---|---|---|
| | | Detailed | Not Detailed | Impact of Detailing | Detailed | Not Detailed | Impact of Detailing | Detailed | Not Detailed | Targeting |
| Agent A | 47.5% | 59.7 | 27.9 | **31.8** | 33.7 | 9.1 | **24.6** | 49.5 | 45.0 | **4.5** |
| Agent B | 33.0% | 27.7 | 4.3 | **23.4** | 3.6 | 0.3 | **3.3** | 45.7 | 47.8 | **-2.1** |
| Agent C | 52.5% | 51.0 | 31.3 | **19.7** | 6.9 | 4.6 | **2.3** | 47.3 | 46.9 | **0.4** |
| Agent D | 39.5% | 46.5 | 30.2 | **16.3** | 4.6 | 4.1 | **0.5** | 46.1 | 47.8 | **-1.7** |
| Agent E | 52.0% | 85.1 | 66.9 | **18.2** | 42.2 | 24.5 | **17.7** | 46.8 | 47.4 | **-0.6** |
| Agent F | 54.0% | 74.1 | 59.8 | **14.3** | 19.1 | 15.1 | **4.0** | 51.5 | 42.0 | **9.5** |
| Agent G | 24.5% | 38.8 | 5.6 | **33.2** | 12.7 | 1.6 | **11.1** | 49.1 | 46.5 | **2.6** |

EP 1 253 544 A1

**Fig. 6**

## Radar Dynamics® - The Approach

**Marketing input - Radar Detailing Rate** ™

| Considered brand | Attitudes & evaluation | Trial prescription | Regular prescription | Drug of Choice |
|---|---|---|---|---|

**Market adoption - Radar Adoption Rate** ™

**Market performance - Dynamic Capture Rate** ®

**Rationales for brand choice**

**Impact of detailing - Radar Marketing Productivity** ™

**European Patent Office**

## DECLARATION

which under Rule 45 of the European Patent Convention shall be considered, for the purposes of subsequent proceedings, as the European search report

**Application Number**

EP 02 44 5052

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |
|---|---|

The claims relate to subject-matter excluded from patentability under Article 52(2) and (3) EPC. A meaningful search is not possible on the basis of all claims because all claims are directed to - Scheme, rules and method for doing business - Article 52 (2)(c) EPC. In particular, in the present application, there is claimed a computerized processing and presenting of market and marketing information. Furthermore, the critical step of "forecasting the future sales" is not specified in terms of technical features and the reader is left in doubt as how this step might be performed by a central computer unit - Article 84 EPC. In addition, the step of "forcasting the future sales" seems to involve a mental activity. Thus, a meaningful search is also not possible on the basis of all claims because all claims are directed to - Scheme, rules and method for performing mental acts - Article 52 (2)(c) EPC.

Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines for Examination in the EPO, Part B, Chapter VIII, 1-6.

The applicant's attention is drawn to the
-/--

| Place of search | Date | Examiner |
|---|---|---|
| MUNICH | 19 July 2002 | Höhn, M |

European Patent
Office

**DECLARATION**

**Application Number**

which under Rule 45 of the European Patent Convention EP 02 44 5052
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|

Reason:

fact that a search may be carried out
during examination following a declaration
of no search under Rule 45 EPC, should the
problems which led to the declaration
being issued be overcome (see EPC
Guideline C-VI, 8.5).

-- -- --

-- -- -- --

| Place of search | Date | Examiner |
|---|---|---|
| MUNICH | 19 July 2002 | Höhn, M |

EPO FORM 1504 (P04C37)